# EUROPÄISCHE PATENTSCHRIFT

(11) **EP 2 255 516 B1**
(45) Veröffentlichungstag und Bekanntmachung des Hinweises auf die Patenterteilung: **03.07.2019**
(21) Anmeldenummer: 09721467.0
(22) Anmeldetag: 20.03.2009
(51) Int. Cl.: H04L 29/06, H04W 12/06, G06F 21/00

(54) **VERFAHREN ZUR ZEITWEISEN PERSONALISIERUNG EINER KOMMUNIKATIONSEINRICHTUNG**
METHOD FOR THE TEMPORARY PERSONALIZATION OF A COMMUNICATION DEVICE
PROCÉDÉ PERMETTANT UNE PERSONNALISATION TEMPORAIRE D'UN DISPOSITIF DE COMMUNICATION

(30) Priorität: 21.03.2008 AT 4512008
(43) Veröffentlichungstag der Anmeldung: 01.12.2010
(73) Patentinhaber: Kisters, Friedrich, 8280 Kreuzlingen (CH)
(72) Erfinder: KISTERS, Friedrich, CH 8280 Kreuzlingen (CH)
(74) Vertreter: Patentanwälte Dr. Keller, Schwertfeger Partnerschaft mbB
(86) Internationale Anmeldenummer: PCT/EP2009/002069
(87) Internationale Veröffentlichungsnummer: WO 2009/115339

(56) Entgegenhaltungen:
- US-A1- 2004 250 085
- US-A1- 2006 013 446
- US-B1- 6 703 918

## Beschreibung

Die Erfindung betrifft ein Verfahren zur zeitweisen Personalisierung einer Kommunikationseinrichtung. Des Weiteren betrifft die Erfindung eine Kommunikationseinrichtung und eine Authentifizierungseinrichtung.

Bei Geräten bzw. Vorrichtungen die abgesetzt von einer zentralen Verwaltung bzw. Steuerung betrieben bzw. eingesetzt werden sollen ergibt sich für den Fachmann immer wieder das Problem, die Zugriffsbefugnis eindeutig festlegen zu müssen. Insbesondere wird des Öfteren gefordert, den Zugriff bzw. die Benutzung einer Kommunikationseinrichtung nur einem bestimmten Benutzer bzw. einen Personenkreis zu gestatten. Für ein Gerät bzw. eine Vorrichtung die nach erfolgter Authentifizierung dauerhaft einem Benutzer zugeordnet werden kann ist es bspw. möglich, diese Zuordnung mittels eines eindeutigen Schlüssels zu bewerkstelligen, wobei dieser Schlüssel ausschließlich dem authentifzierten Benutzer bekannt ist. Der Schlüssel wird an den Benutzer verteilt und ist bei Inbetriebnahme bzw. Inanspruchnahme des Geräts vorzuweisen, bspw. dadurch, dass eine lokale Authentifikation durchgeführt wird. Das Problem dabei ist, dass der Benutzer stets ein Schlüsselmerkmal mit sich führen muss, wobei insbesondere die Gefahr besteht, dass dieses Schlüsselmerkmal entwendet und dann von Dritten missbräuchlich verwendet wird.

Aus dem Bereich der mobilen Sprach-Kommunikationseinrichtungen sind dazu mehrer Möglichkeiten bekannt, um vor Benutzung der Kommunikationseinrichtung die Authentizität des Benutzers zu prüfen bzw. zu gewährleisten.

Beispielsweise offenbart die US 2002/0060243 A1 eine biometrische Authentifizierungseinrichtung zur Verwendung mit einer Telekommunikationseinrichtung wie bspw. einem Mobiltelefon. Die biometrische Authentifizierungsvorrichtung weist ein Erfassungsmittel zur Aufnahme eines Fingerabdrucks auf und verfügt zusätzlich über eine Lesevorrichtung für eine Datenkarte, wobei auf der Datenkarte Referenzmuster für zulässige Fingerabdruckmuster eines Benutzers hinterlegt sind. Für eine biometrische Authentifikation des Benutzers wird nun ein Fingerabdruck erfasst und mit dem, auf der Karte hinterlegten Referenzmuster verglichen und anschließend eine authentifizierungspflichtige Aktion durchgeführt.

Auch in der WO 2006/019396 A1 ist eine mobile Kommunikationseinrichtung offenbart die eine biometrische Identifikation in Echtzeit ermöglicht. Mittels eines biometrischen Sensors werden diskret und unbemerkt biometrische Daten von Personen erfasst, die bei Gesellschafts- bzw. Geschäftsveranstaltungen angetroffen werden, um diese in Echtzeit identifizieren zu können und die persönlichen Charakteristiken bzw. Informationen in einer Kontaktdatenbank abrufen zu können. Für mehrere mögliche übereinstimmende Identifikationen werden Kontaktinformationen auf einer Anzeige oder einem anderen Ausgabegerät der Kommunikationseinrichtung angezeigt, um den Benutzer bei der Auswahl der korrekten Identität der erfassten Person zu unterstützen.

Auch die WO 2006/018248 A2 offenbart ein mobiles tragbares Fernsprechgerät das biometrische Daten eines Benutzers erfasst und mittels einer Vergleichseinrichtung mit in einer Speichereinrichtung hinterlegten biometrischen Referenzdaten des Benutzers vergleicht.

Die EP 1 742 450 A2 offenbart eine mobile Kommunikationseinrichtung umfassend eine biometrische Identifikationseinrichtung, wobei basierend auf den erfassten biometrischen Merkmalen eine vorbestimmte persönliche Identifikationsnummer verschlüsselt wird.

Alle bekannten Vorrichtungen haben nun insbesondere den Nachteil, dass bereits vor der erstmaligen Benutzung der Kommunikationseinrichtung, ein personenspezifisches Identifikationsmerkmal auf dieser vorhanden sein muss. Insbesondere ist dies bspw. in einem Speicher hinterlegt bzw. wird mittels einer Datenspeichereinrichtung an der Kommunikationseinrichtung angeboten. Diese erforderliche Personalisierung vor der Inbetriebnahme macht es nun erforderlich, dass die Kommunikationseinrichtung zur Personalisierung bei einer Authentifzierungsstelle bzw. bei einem Kommunikationsdienstbetreiber präsentiert bzw. vorgelegt werden muss. Durch diese Personalisierung ist die Kommunikationseinrichtung auf einen bestimmten bzw. auf eine definierte Anzahl möglicher Benutzer festgelegt. Die Aufnahme einer weiteren autorisierten Person erfordert zumeist eine erneute Hinterlegung eindeutiger persönlicher Identifikationsmerkmale in der Kommunikationseinrichtung. Insbesondere ist durch die bekannte Art der Authentifizierung bzw. Personalisierung, eine Kommunikationseinrichtung zumeist nur einem einzigen Benutzer zugeordnet, wobei ggf. zur Benützung eine erneute Authentifizierung gegenüber der Kommunikationseinrichtung erforderlich ist. Die Authentifizierung ist somit an die Kommunikationseinrichtung gebunden, ein wahlfreier Wechsel und damit verbunden eine wahlfreie Personalisierung einer Kommunikationseinrichtung ist mit den bekannten Verfahren bzw. Vorrichtungen nicht möglich.

Die Aufgabe der Erfindung liegt nun darin ein Verfahren zu schaffen, um eine nicht personalisierte Kommunikationseinrichtung zumindest zeitweise einem eindeutig identifizierten und authentifizierten Benutzer zuordnen zu können. Das Verfahren soll dabei derart ausgestaltet sein, dass vom Benutzer für die korrekte Identifikation bzw. Authentifikation keine zusätzlichen Vorrichtungen bzw. Einrichtungen mitgeführt werden müssen. Insbesondere ist es Aufgabe der Erfindung, die Identifikation und Authentifikation durch dem Benutzer eigene bzw. bekannte Merkmale durchführen zu können. Die Aufgabe der Erfindung liegt auch darin, eine Kommunikationseinrichtung und eine Authentifikationseinrichtung zu schaffen, wobei sich die Kommunikationseinrichtung zeitweise einem eindeutig identifizierten und authentifizierten Benutzer zuordnen lässt und wobei diese Authentifikation des Benutzers und Personalisierung von der Authentifizierungseinrichtung durchgeführt wird.

Die Aufgabe der Erfindung wird, wie nachfolgend beschrieben, durch die Verfahrensschritte gemäß dem Hauptanspruch gelöst.

Eine Kommunikationseinrichtung wie sie beim erfindungsgemäßen Verfahren eingesetzt wird ist nicht personalisiert, steht daher also jedem beliebigen Benutzer zur Verfügung, wobei eine bestimmungsgemäße Verwendung der Kommunikationseinrichtung erst nach erfolgter Personalisierung möglich ist. Ein erster Schritt zur Personalisierung einer Kommunikationseinrichtung besteht darin, eine Kommunikationsverbindung zwischen der Kommunikationseinrichtung und einer Authentifizierungseinrichtung herzustellen. Zumeist befindet sich die Kommunikationseinrichtung nicht am Ort der Authentifizierungseinrichtung, also wird die Kommunikationsverbindung bevorzugt mittels eines drahtlosen Kommunikationswegs bzw. Kommunikationsmittels hergestellt, wobei auch drahtgebundene Kommunikationswege möglich sind. Wesentlich ist dabei, dass zur Herstellung der Kommunikationsverbindung keine personen- bzw. benutzerspezifische Information erforderlich ist, also dass der Kommunikationsweg von einer allfälligen Personalisierung unabhängig ist.

Als nächster Schritt wird von der Authentifizierungseinrichtung eine Authentifizierungsanforderung an die Kommunikationseinrichtung übertragen. Die Kommunikationseinrichtung kann bspw. für einen spezifischen Dienst ausgebildet sein, es ist jedoch auch möglich, dass die Kommunikationseinrichtung eine Mehrzahl unterschiedlicher Dienste anbietet, bereit stellt oder vermittelt. Da die Authentifizierungseinrichtung für eine Mehrzahl von Kommunikationseinrichtungen verwendet werden kann, ist es bspw. auch möglich, bei der Herstellung der Kommunikationsverbindung eine Dienstkennung zu übertragen. Die Authentifizierungseinrichtung kann nun anhand dieser Dienstkennung die Kommunikationseinrichtung identifizieren und darauf hin eine entsprechend parametrierte Authentifizierungsanforderung an diese übermitteln. Somit lässt sich sicherstellen, dass eine Vielzahl unterschiedlicher Kommunikationseinrichtungen von der Authentifizierungseinrichtung angesprochen bzw. verwaltet werden können. Die Authentifizierungsanforderung kann bspw. die Information umfassen, welches bzw. welche eindeutigen Merkmale des Benutzers im nächsten Verfahrensschritt erfasst werden sollen.

Die Kommunikationseinrichtung weist daher Erfassungsmittel auf, mit denen ein eindeutiges Merkmal des Benutzers erfassbar ist, wobei ggf. die Steuerung bzw. Auswahl der zu erfassenden Merkmale basierend auf der parametrierten Authentifizierungsanforderung erfolgt.

Das erfasste Merkmal des Benutzers wird in den nächsten Verfahrensschritten an die Authentifizierungseinrichtung übertragen und dort mit einem hinterlegten Referenzmerkmal verglichen. Entsprechend des Ergebnisses des Vergleichs wird bei erfolgreicher Übereinstimmung eine Benutzerkennung an die mobile Kommunikationseinrichtung übertragen. Durch die Übertragung der Benutzerkennung wird aus einer universellen und insbesondere nicht bestimmungsgemäß funktionalen Kommunikationseinrichtung eine personalisierte Kommunikationseinrichtung, die vom identifizierten und autorisierten Benutzer in bestimmungsgemäßer Weise verwendet werden kann. Der besondere Vorteil des erfindungsgemäßen Verfahrens liegt nun darin, dass eine Kommunikationseinrichtung für einen Benutzer nur über die Erfassung eines persönlichen Merkmals des Benutzers für diesen verwendbar wird. Insbesondere ist es für den Benutzer nicht erforderlich, eine Vorrichtung zur Speicherung einer Art von persönlicher Identifikationskennung mit zu führen bzw. präsentieren zu müssen. Derartige Vorrichtungen bergen immer die Gefahr einer missbräuchlichen Verwendung bzw. besteht die Möglichkeit des Verlustes, auch ist das Mitführen und Präsentieren derartiger Vorrichtungen zumeist mit beträchtlichem Aufwand verbunden.

Als eindeutiges Benutzermerkmal kann bspw. eines der Gruppe umfassend biometrisches Merkmal, alphanumerische Kennung, oder persönliches Verhaltensmuster erfasst werden. Biometrische Merkmale erlauben die Identifikation bzw. Authentifikation einer Person über eindeutige und zumeist nicht oder nur sehr schwer zu fälschende Merkmale. Beispiele dafür sind Fingerabdruck, Sprache sowie die Iris des Auges, wobei dem Fachmann weitere biometrische Merkmale bekannt sind. Eine alphanumerische Kennung kann im einfachsten Fall aus einer Abfolge numerischer Zeichen bestehen, die einer bestimmten Reihenfolge bspw. von links nach rechts angegeben werden. Es ist jedoch auch möglich, eine alphanumerische Kennung auf unterschiedliche Leseweisen anzugeben, um so zusätzlich zur Benutzerkennung noch verschiedene Zustände kodiert anzugeben. Beispielsweise könnte eine Leseweise von links nach rechts dass Standardmerkmal charakterisieren. Wird nun die Person bspw. bedroht, könnte diese die alphanumerische Kennung bspw. in der Leseweise von rechts nach links angeben, was von der Authentifizierungseinrichtung nach der Übermittlung der Kennung als Alarmzustand ausgewertet wird, wodurch sich bspw. eine Schutzmaßnahme für die Person in Gang auslösen lässt. Die Benutzerauthentifizierung könnte scheinbar erfolgreich durchgeführt werden, ohne dass der Angreifer den im Hintergrund ausgelösten Alarm bemerkt.

Als eindeutiges Benutzermerkmal könnte bspw. auch ein persönliches Verhaltensmuster erfasst werden. Eine Person lässt sich bspw. dadurch charakterisieren und somit identifizieren bzw. authentifizieren, wie die Reaktion auf bestimmte Szenarien, wie bspw. Fragestellungen, ausfällt. Dazu wird in einem vorhergehenden Vorgang ein Verhaltensmuster einer Person aufgenommen und analysiert, wodurch sich bspw. eine Authentifizierungsanforderung generieren ließe, die eine Abfolge von Fragestellungen umfasst, auf die eine Person in der für sie typischen Art und Weise antwortet bzw. reagiert.

Um eine Belastung der Authentifizierungseinrichtung durch wiederholt durchzuführende Authentifizierungen zu vermindern, wird gemäß einer Weiterbildung ein Referenzmerkmal an die mobile Kommunikationseinrichtung übertragen und auf dieser temporär abgelegt. Da die Kommunikationseinrichtung zumeist ein Speichermittel aufweist, ist es in vorteilhafter Weise möglich, das übertragene Referenzmerkmal im Speicher abzulegen. Dies ist sicherheitstechnisch unkritisch, da der Benutzer korrekt identifiziert und authentifiziert wurde und dieser somit berechtigterweise die Kommunikationseinrichtung personalisiert zugeordnet bekommen hat.

Wenn ein eindeutiges Referenzmerkmal an der Kommunikationseinrichtung hinterlegt wurde ist in vorteilhafter Weise auch ein Vergleich des erfassten eindeutigen Merkmals mit dem hinterlegten Merkmal an der Kommunikationseinrichtung möglich, ohne dass dafür das Merkmal an die Authentifizierungseinrichtung übertragen werden müsste und dort verglichen werden müsste. Die Kommunikationseinrichtung könnte sich bspw. nach einer bestimmten Zeit bzw. nach einer bestimmten Anzahl von Vorgängen verriegeln und eine Weiterbenutzung erst nach einer erneuten Authentifizierung des Benutzers ermöglichen. In diesem Fall hätte die anspruchsgemäße Ausbildung den Vorteil, dass die Authentifizierung lokal von der Kommunikationseinrichtung durchgeführt werden könnte.

Von besonderem Vorteil ist eine Weiterbildung bei der an der Kommunikationseinrichtung regelmäßig ein eindeutiges Merkmal erfasst wird, da somit auch nach erstmaliger Identifikation bzw. Authentifikation des Benutzers wiederholt geprüft werden kann, ob der aktuell die Kommunikationseinrichtung verwendende Benutzer dem entspricht, für den die Kommunikationseinrichtung ursprünglich personalisiert wurde. Somit lässt sich sicherstellen, dass eine missbräuchliche Verwendung durch Entwendung der Kommunikationseinrichtung zuverlässig verhindert wird.

Die regelmäßige Erfassung kann bspw. durch ein periodisches Intervall gegeben sein, es ist aber auch möglich, dass vor bestimmten Vorgängen bzw. Aktionen eine erneute Authentifizierung erforderlich ist.

In einer besonders vorteilhaften Weiterbildung kann die regelmäßige Erfassung derart durchgeführt werden, dass die bestimmungsgemäße Benutzung der Kommunikationseinrichtung durch den Benutzer nicht beeinträchtigt wird. Beispielsweise könnten während einer andauernden Kommunikation regelmäßig Stimmproben analysiert werden, um daraus das Referenzmuster des Benutzers zu extrahieren.

Auch im Hinblick auf eine Entlastung der Authentifizierungseinrichtung bzw. einer Vereinfachung einer wiederholten Authentifizierung an der Kommunikationseinrichtung ist es von Vorteil, wenn gemäß einer Weiterbildung das erfasste Merkmal von einer Verarbeitungseinrichtung an der Kommunikationseinrichtung analysiert wird. Das erfasste Merkmal kann ggf. derart komplex ausgebildet sein, dass eine Übertragung zur Authentifizierungseinrichtung einen großen Aufwand mit sich bringen würde. Wenn die Kommunikationseinrichtung anspruchsgemäß dazu ausgebildet ist, dass erfasste Merkmal bereits zu analysieren bzw. aufzubereiten, lassen sich bspw. charakteristische Details des Merkmals extrahieren, wodurch sich bspw. die an die Authentifizierungseinrichtung zu übertragende Informationsmenge deutlich reduzieren lässt. Auch kann die Verarbeitungseinrichtung bereits dazu ausgebildet sein, die Qualität des erfassten Merkmals zu analysieren, um somit bereits vorweg entscheiden zu können, ob das erfasste Merkmal zur Authentifizierung tauglich ist, oder ob aufgrund einer fehlerhaften Erfassung eine erneute Erfassung erforderlich ist.

Ähnlich wie mittels eines Fingerabdrucks, lässt sich eine Person auch über das Lautbild eindeutig identifizieren und authentifizieren. Gemäß einer Weiterbildung wird bei einer Merkmalsanalyse eine Lautbildanalyse durchgeführt, insbesondere wird eine so genannte Formantenanalyse durchgeführt, wobei die wesentlichen und eindeutigen Laut bildenden Frequenzen einer Person ermittelt werden. Diese Formanten sind vom einmaligen Stimmformungsraum der Person abhängig und eignen sich somit zur Identifikation einer Person.

Im Hinblick auf die Sicherung der Authentifizierung ist eine Weiterbildung von ganz entscheidendem Vorteil, bei der das Merkmal vor der Übertragung an die Authentifizierungseinrichtung verschlüsselt wird. Eine Kommunikationsverbindung birgt immer die Gefahr einer missbräuchlichen Beeinflussung, insbesondere lässt sich die übertragende Information abfangen und ausspionieren. Wird das erfasste bzw. ggf. analysierte Merkmal vor der Übertragung verschlüsselt, lässt sich die Gefahr einer missbräuchlichen Verwendung wesentlich reduzieren. Die Verschlüsselung kann bspw. durch ein Einweg- oder Public-Key-System durchgeführt werden, wobei ggf. mit der Authentifizierungsanforderung ein öffentlicher oder ein Teilschlüssel übertragen wird, mit dem das Merkmal verschlüsselt wird. Ein Einweg-System hat den besonderen Vorteil, dass nur das Ergebnis der Verschlüsselung übertragen wird und somit selbst bei missbräuchlicher Aufzeichnung der Übertragung, ein Rückschluss auf das ursprüngliche Merkmal nicht möglich ist. Dem Fachmann sind diesbezüglich eine Mehrzahl unterschiedlicher möglicher Verschlüsselungsverfahren bzw. Methoden bekannt, um Information derart zu verschlüsseln, dass eine Entschlüsselung nicht oder nur mit einem bestimmten eindeutigen Schlüssel möglich ist.

Erfindungsgemäß ist zur kommunikativen Verbindung der Kommunikationseinrichtung mit der Authentifizierungseinrichtung die Herstellung einer Kommunikationsverbindung zwischen den beiden Komponenten erforderlich. Gemäß einer Weiterbildung wird die Kommunikationseinrichtung mittels der Benutzerkennung in einem Kommunikationsnetzwerk registriert, was den besonderen Vorteil hat, dass ein existierendes Kommunikationsnetzwerk bzw. eines aus einer Mehrzahl unterschiedlicher und parallel existierender Kommunikationsnetzwerke gewählt werden kann, in diesem die Kommunikationseinrichtung als gültige und zugelassene Kommunikationsgegenstelle registriert wird. Das Kommunikationsnetzwerk kann bspw. durch ein öffentliches Mobilfunknetzwerk gebildet sein, es ist aber auch möglich, dass die Kommunikationseinrichtung in einem 2G- bzw. 3G-Mobiltelefonnetzwerk eines Anbieters bzw. Betreibers registriert wird. Mittels der Benutzerkennung, in der bspw. Netzwerkzugangscodes bzw. Netzwerkregistrierungscodes hinterlegt sind, kann die Kommunikationseinrichtung im Kommunikationsnetzwerk registriert werden und ist somit über dieses Kommunikationsnetzwerk erreichbar bzw. kann darüber Kommunikationsverbindungen aufbauen. Für die Benutzung des Kommunikationsnetzwerkes bzw. der darüber angebotenen Dienste können ggf. Gebühren anfallen, wobei über die Benutzerkennung die eindeutige Benutzerzuordnung sichergestellt ist und somit dem Dienstbetreiber bzw. Dienstanbieter auch die für die Vergebührung erforderlichen Verrechnungsdaten vorliegen. Als Schutz gegen unbefugte Benutzung der Kommunikationseinrichtung kann diese Zuordnung bspw. zeitbegrenzt durchgeführt werden, also dass nach Ablauf einer vorgebbaren Zeit die Registrierung der Kommunikationseinrichtung im Kommunikationsnetzwerk gelöscht wird. Ein möglicher Einsatz der Kommunikationseinrichtung könnte darin bestehen, für eine kurze Zeit einen Dienst in Anspruch zu nehmen. Wenn sich der Benutzer dann nicht ordnungsgemäß vom in Anspruch genommen Dienst abmeldet, bleibt die Registrierung der Kommunikationseinrichtung im Kommunikationsnetzwerk bestehen und könnte bspw. von einem Dritten missbräuchlich verwendet werden. Der Dienstanbieter könnte nun eine Zeitspanne festlegen, nach der die Registrierung gelöscht wird und somit eine missbräuchliche Benutzung verhindert wird. Somit stellt auch eine versehentlich vergessene bzw. verlorene oder ggf. gestohlene Kommunikationseinrichtung kein wesentliches Sicherheitsrisiko dar.

Bei der Erfassung eindeutiger Personenmerkmale ergibt sich ggf. das Problem, dass die erfassten Benutzermerkmale in ihrer Detailliertheit bzw. im Grad der Übereinstimmung zwischen wiederholten Erfassungsvorgängen und insbesondere gegenüber dem Referenzmerkmal geringfügig unterschiedlich sein können. Daher stellt sich beim Vergleich des erfassten Merkmals mit einem hinterlegten Referenzmerkmal das Problem, dass eine exakte Übereinstimmung zumeist nur sehr schwer erzielbar ist und es daher öfters zu fälschlichen Abweisungen des Benutzers kommen könnte. Daher ist eine Weiterbildung von ganz entscheidendem Vorteil, bei der der Vergleich des übertragenen Merkmals mit dem hinterlegten Merkmal unscharf durchgeführt wird. Im Gegensatz zu einer exakten Übereinstimmung erhält man bei einem unscharfen Vergleich im Wesentlichen Wahrscheinlichkeiten bzw. eine Wahrscheinlichkeitsverteilung für den Grad der Übereinstimmung. Es lassen sich somit also Schranken bzw. Bereiche definieren in denen eine erreichte Übereinstimmung als ausreichend für die Identifikation bzw. Authentifikation des Benutzers festgelegt ist. Ebenso lassen sich zusätzliche Bereiche angeben, in denen zwar eine eindeutige Identifikation bzw. Authentifikation nicht mehr sicher gegeben ist, eine Fälschung des erfassten eindeutigen Merkmals noch recht unwahrscheinlich ist. Im Wesentlichen lässt sich mit diesem unscharfen Vergleich und der Einteilung in mehrere Übereinstimmungsbereiche bspw. ein so genanntes Risikoprofil erstellen, mit dem ein Dienstanbieter den möglichen Schaden bei einer in fälschlicher Weise erfolgreichen Identifikation bzw. Authentifikation, ermitteln kann. Durch ein derartiges Risikoprofil lässt sich eine höhere Akzeptanz des anspruchsgemäßen weitergebildeten Verfahrens durch die Anwender erreichen, da entsprechend der Anforderung, auch eine unvollständige Übereinstimmung des erfassten mit dem hinterlegten Merkmals als gültige Authentifizierung erkannt und akzeptiert wird und die Benutzerkennung an die Kommunikationseinrichtung übertragen wird, wodurch diese personalisiert wird.

Im Hinblick auf die Sicherung der Zuordnung ist eine Weiterbildung von Vorteil, bei der bei mangelhafter bzw. keiner Übereinstimmung des erfassten biometrischen Merkmals mit dem hinterlegten Referenzmerkmal, die in der Kommunikationseinrichtung hinterlegte Benutzerkennung deaktiviert und/oder gelöscht wird. Zur Sicherung der ordnungsgemäßen Personalisierung einer Kommunikationseinrichtung ist es erforderlich, dass während des bestimmungsgemäßen Einsatzes die korrekte Personalisierung sichergestellt ist. Beispielsweise kann zyklisch bzw. regelmäßig ein Benutzermerkmal erfasst werden und mit dem hinterlegten Referenzmerkmal verglichen werden, wobei dieser Vergleich sowohl an der Kommunikationseinrichtung als auch an der Authentifizierungseinrichtung durchgeführt werden kann. Somit ist sowohl eine lokale, als auch eine abgesetzte Authentifikation möglich. Schlägt ein derartiger Authentifizierungsvorgang fehl, ist anzunehmen, dass es sich beim Benutzer der Kommunikationseinrichtung nicht mehr um den ursprünglich identifizierten und authentifizierten Benutzer handelt. Mit der vorteilhaften Weiterbildung ist es nun möglich, die Benutzerkennung aus der Kommunikationseinrichtung zu löschen und somit die Personalisierung der Kommunikationseinrichtung aufzuheben, wodurch eine missbräuchliche Verwendung verhindert wird. Der Authentifizierungsvorgang zur Prüfung der korrekten Identität bzw. Authentizität des Benutzers muss jedoch in der Lage sein, einen bestimmungsgemäßen Einsatz der Kommunikationseinrichtung zu erkennen, selbst wenn die Kommunikationseinrichtung sich kurzfristig im Zugriff durch einen anderen Benutzer befindet. Beispielsweise kann als eindeutiges Merkmal die menschliche Stimme erfasst werden, wobei es zu keiner Löschung der Benutzerkennung kommen darf, wenn die Kommunikationseinrichtung in einer Umgebung eingesetzt wird, in denen neben dem authentifizierten Benutzer eine Mehrzahl von Stimmen anderer Benutzer erfasst werden. Es ist jedoch auch denkbar, dass eine Kommunikationseinrichtung wiederholt von einer eingeschränkten Personengruppe benützt wird. In diesem Fall führt ein Löschen der Benutzerkennung zu einem unnötige hohen Aufwand hinsichtlich der erforderlichen erneuten Authentifikation. Daher ist eine Weiterbildung von besonderem Vorteil, bei dem die Benutzerkennung deaktiviert wird, also auf der Kommunikationseinrichtung hinterlegt bleibt und somit schnell wieder verfügbar ist. Bei einer erneuten Personalisierungsanfrage könnte die Kommunikationseinrichtung selbst prüfen, ob ein derartige Benutzerkennung bereits hinterlegt ist und dann die Authentifizierung entsprechend schnell durchführen, insbesondere ohne die Authentifizierungseinrichtung kontaktieren zu müssen. Vorteilhaft ist jedenfalls wenn der Benutzer selbst festlegen kann, ob seine Benutzerkennung bei einer fehlgeschlagenen Authentifikation deaktiviert oder gelöscht werden soll.

Einen weiteren Beitrag zur sicheren Identifizierung und Authentifizierung bringt eine Weiterbildung, bei der bei mangelhafter bzw. keiner Übereinstimmung des erfassten Merkmals mit dem hinterlegten Referenzmerkmal, eine weitere Authentifizierungsanforderung an die Kommunikationseinrichtung übertragen wird. Beispielsweise kann es durch Störungen in der Erfassung bzw. durch äußere Einflüsse bei der Erfassung des eindeutigen Merkmals zu einer nicht eindeutigen bzw. nicht vollständigen Erfassung des Merkmals kommen, wodurch der nachfolgende Vergleich einen Fehler liefern würde, wodurch der zulässige Benutzer aufgrund der fehlerhaften Authentifikation abgewiesen werden würde. Geschieht dies recht oft, kann das zu einem Verlust der Akzeptanz des erfindungsgemäßen Verfahrens führen. Gemäß der vorteilhaften Weiterbildung wird nun von der Authentifizierungseinrichtung eine weitere Authentifizierungsanforderung an die Kommunikationseinrichtung übertragen, wobei mit der erneuten Authentifizierungsanforderung ein anderes eindeutiges Merkmal erfasst werden soll, als dies bei der vorangegangenen Authentifizierungsanforderung der Fall war. Beispielsweise könnte mit der initalen Authentifizierungsanforderung ein Fingerabdruck erfasst werden, wobei es ggf. aufgrund einer Verletzung oder einer Verschmutzung der Haut im zu erfassenden Abschnitt zu einem fehlerhaften Vergleich mit dem hinterlegten Referenzmerkmal kommen kann. Anspruchsgemäß würde mit der weiteren Authentifizierungsanforderung bspw. eine Erfassung eines Audiomerkmals gefordert, wodurch an der Kommunikationseinrichtung die entsprechenden Vorrichtungen aktiviert werden, um ein Sprachsignal erfassen zu können. Somit ist in vorteilhafter Weise sichergestellt, dass mehrere Möglichkeiten gegeben sind, um einen Benutzer eindeutig identifizieren und authentifizieren zu können.

Die Kommunikationseinrichtung kann bspw. eine Vielzahl unterschiedlicher Dienste anbieten, wobei die einzelnen Dienste ggf. unterschiedliche Sicherheitsanforderungen hinterlegt haben. Gemäß einer Weiterbildung wird die Authentifizierungsanforderung nach einem Sicherheitshierarchieprotil durchgeführt, was den besonderen Vorteil hat, dass für jeden angeforderten Dienst eine unterschiedliche Qualität der Authentifizierung gefordert werden kann. So ist bspw. für niedrig priorisierte Dienste, bei denen bei missbräuchlicher Verwendung nur geringer Schaden entstehen kann, die Eingabe einer alphanumerischen Kennung für eine korrekte Identifizierung und Authentifizierung ausreichend. Ist dem gegenüber der angeforderte Dienst dadurch charakterisiert, dass bspw. eine Finanztransaktion durchgeführt werden soll bzw. eine Produktionseinrichtung in Betrieb genommen werden soll, so kann mit der Authentifizierungsanforderung gefordert sein, dass sowohl ein erfasster Fingerabdruck, als auch ein erfasstes Audiosprachmuster zu einem bestimmten, insbesondere einem hohen Grad mit den hinterlegten Referenzmerkmal übereinstimmen muss.

Die Aufgabe der Erfindung wird auch durch eine Kommunikationseinrichtung gelöst, bei der im Speicher zumindest zeitweise eindeutige Benutzerkennung abgelegt ist. Bekannte Kommunikationseinrichtungen sind einem Kommunikationsnetzwerk zumeist fest zugeordnet, da insbesondere die Benutzerkennung sowie ggf. wesentliche Netzwerkkennungen in der Kommunikationseinrichtung fix integriert sind bzw. diese ohne eine derartige Benutzerkennung nicht in Betrieb genommen werden kann. Der besondere Vorteil der erfindungsgemäßen Kommunikationseinrichtung liegt nun darin, dass die völlig unpersonalisiert und keinem Kommunikationsnetzwerk zugeordnet verfügbar ist und erst durch die zeitweise Zuordnung bzw. Hinterlegung der eindeutigen Benutzerkennung im Speicher für einen bestimmten Dienst bzw. eine bestimmte Anwendung frei geschaltet wird, also personalisiert wird. Eine erfindungsgemäße Kommunikationseinrichtung kann nun frei verfügbar zugänglich gemacht werden, wobei jede Person durch Auslösen einer Authentifizierungsanforderung diese Kommunikationseinrichtung für sich personalisieren kann und darüber eine Auswahl verschiedener Dienste abwickeln kann.

Zur eindeutigen Identifizierung und Authentifizierung einer Person ist es von ganz besonderem Vorteil, wenn gemäß einer Weiterbildung eine biometrische Erfassungsvorrichtung vorhanden ist, die aus der Gruppe umfassend Fingerabdruckscanner, Sprachanalysemodul und Bilderfassungseinrichtung gebildet ist. Mittels biometrischer Daten lässt sich eine Person mit einem sehr hohen Grad an Sicherheit identifizieren und authentifizieren, da derartige biometrische Merkmale für jede Person einzigartig sind. Diese Weiterbildung ist insbesondere dadurch von Vorteil, dass zur Personalisierung einer Kommunikationseinrichtung keine zusätzliche, vom Benutzer mitzuführende Vorrichtung erforderlich ist, sondern dass die Identifikation und Authentifikation alleine durch dem Benutzer eigene Merkmale möglich ist, wobei eine Fälschung der Merkmale weitestgehend nicht möglich ist. Dem Fachmann sind neben den dargestellten Beispielen weitere biometrische Merkmale bekannt, die anspruchsgemäß mitumfasst sind.

Da ggf. eine Authentifizierung des Benutzer vor Ort, also durch die Kommunikationseinrichtung selbst durchgeführt werden soll, ist die Ausbildung von Vorteil, bei der die biometrische Erfassungsvorrichtung ein Analyse- und Auswertungsmodul umfasst. Somit ist in vorteilhafter Weise eine Übertragung der erfassten Merkmale zu einer Authentifizierungseinrichtung nicht erforderlich, was insbesondere die zu übertragende Informationsmenge reduziert und somit die Gefahr einer möglichen Beeinflussung der übertragenen Information reduziert. Auch können wiederholte Authentifizierungen von der Kommunikationseinrichtung selbst durchgeführt werden, ohne dass dafür die entfernte Authentifizierungseinrichtung erforderlich wäre.

Im Hinblick auf einen möglichst verbreiteten Einsatz der Kommunikationseinrichtung ist eine Weiterbildung von Vorteil, bei der die Kommunikationsschnittstelle gebildet ist aus der Gruppe umfassend Funkschnittstelle, optische Schnittstelle, sowie akustische Schnittstelle. Diese Mehrzahl der unterschiedlichen Kommunikationsschnittstellen erlaubt eine Verbindung der Kommunikationseinrichtung mit einer Vielzahl unterschiedlicher Kommunikationsnetzwerke mittels einer Mehrzahl unterschiedlicher drahtloser Kommunikationsschnittstellen, wobei selbstverständlich auch drahtgebundene Kommunikationsschnittstellen mit umfasst sind. Da die erfindungsgemäße Kommunikationseinrichtung bevorzugt zur Bereitstellung von Diensten eines entfernten Dienstanbieters eingesetzt wird, hat diese Weiterbildung den entscheidenden Vorteil, dass sich eine Vielzahl unterschiedlicher Kommunikationsnetze zur Verbindung der Kommunikationseinrichtung mit einer Kommunikationsgegenstelle des Dienstanbieters einsetzen lassen.

Im Hinblick auf eine Ausbildung der Kommunikationseinrichtung ist eine Weiterbildung von Vorteil, bei der die Benutzerkennung eine eindeutige Netzwerkkennung eines Mobilkommunikationsanbieters umfasst. Derartige Netzwerkkennungen sind aus dem Bereich der 2G- bzw. 3G-Mobiltelefonie bekannt und ermöglichen es einer Kommunikationseinrichtung, sich in einem Kommunikationsnetzwerk eines Dienstanbieters zu registrieren. Bei bekannten Kommunikationseinrichtungen war diese Netzwerkkennung zumeist immer unveränderlich integriert, insbesondere zusammen mit der Benutzerkennung, sodass bekannte Kommunikationseinrichtungen nur für einen Netzwerkbetreiber funktional waren, insbesondere nur für einen Benutzer. Der Vorteil der anspruchsgemäßen Weiterbildung liegt nun darin, dass nach Identifikation und Authentifikation des Benutzers, zusammen mit der Benutzerkennung die Netzwerkkennung im Speicher der Kommunikationseinrichtung hinterlegt wird und somit eine eindeutige Zuordnung zu einem Kommunikationsnetzwerk möglich ist.

Im Hinblick auf eine lokale Prüfung des eindeutigen Merkmals ohne Erfordernis einer entfernten Authentifizierung ist eine Weiterbildung von Vorteil, bei der die Benutzerkennung einen Referenzwert eines eindeutigen Merkmals umfasst. Da die Hinterlegung der Benutzerkennung erst nach erfolgreicher Identifikation und Authentifikation erfolgt, stellt auch die Hinterlegung eines Referenzwerts kein Sicherheitsproblem dar, da zu diesem Zeitpunkt die Kommunikationseinrichtung bereits zuverlässig personalisiert ist. Die Ausbildung hat jedoch den besonderen Vorteil, dass eine Prüfung der Authentizität des Benutzers von der Kommunikationseinrichtung selbst durchgeführt werden kann.

Im Hinblick auf mögliche Einsatzgebiete der erfindungsgemäßen Kommunikationseinrichtung ist eine Weiterbildung von besonderem Vorteil, bei der mit der Steuerungseinrichtung eine Datenträgerleseeinrichtung verbunden ist. Mittels dieser Datenträgerleseeinrichtung wird der Zugriff auf eine Vielzahl unterschiedlicher Speichermedien möglich, die bevorzugt zur Speicherung persönlicher Benutzerdaten sowie Zugangskennungen ausgebildet sind bzw. verwendet werden. Beispielsweise ist über die Datenträgerleseeinrichtung ein Zugriff auf personalisierte Zutrittskarten bzw. Identifikationsmodule möglich. Nicht abschließende Beispiele hierfür sind Chip- oder Smart-Cards von Dienstleistungsunternehmen, Finanzdienstleister bzw. Finanzinstituten, Gesundheitspässe sowie jeglicher Art von Kunden- bzw. Mitgliedskarten.

Bekannte Kommunikationseinrichtungen wie bspw. Mobiltelefone weisen eine benutzerunabhängige Signalaufbereitung und Kommunikationsabarbeitung auf, die durch Angabe bzw. Bereitstellung eines personalisierten Teilnehmerkennungsmoduls personalisiert und damit funktionsfähig wird. Mit der anspruchsgemäßen Ausbildung ist es nun möglich, eine Kommunikationseinrichtung zu schaffen, die durch ein personalisiertes Teilnehmerkennungsmodul, das mit der Datenträgerleseeinrichtung wahlfrei verbunden ist, die Kommunikationseinrichtung für einen bestimmten Benutzer dauerhaft zu personalisieren. Durch die erfindungsgemäße Ausbildung ist es nun zusätzlich möglich, diese dauerhafte Personalisierung vorübergehend aufzuheben und durch eine Benutzerkennung zu ersetzen, die einem identifizierten und authentifizierten Benutzer vorübergehend die Verwendung der Kommunikationseinrichtung ermöglicht. Insbesondere ist somit sichergestellt, dass benutzerrelevante Daten wie bspw. die Vergebührung des in Anspruch genommen Dienstes dem jeweiligen Benutzer eindeutig zugeordnet werden können. Dieses Teilnehmerkennungsmodul kann bspw. durch eine aus der Mobiltelefonie bekannte SIM-Card gebildet sein.

Die erfindungsgemäße Kommunikationseinrichtung kann nach erfolgter Identifikation bzw. Authentifikation des Benutzers auch dazu dienen, weitere Einrichtungen die sich im Nahbereich der Kommunikationseinrichtung befinden, für den Benutzer verwendbar machen, wobei die Kommunikationseinrichtung die Benutzerauthentifikation mit der weiteren Einrichtung regelt. Insbesondere ist es daher von Vorteil, wenn mit der Steuerungseinrichtung eine Nahbereichskommunikationseinrichtung verbunden ist, wobei diese bspw. durch eine drahtlose Kommunikationsverbindung wie Blue-Tooth, ZigBee sowie eine Infrarotverbindung (IrDA) gebildet sein kann. Da die Kommunikationseinrichtung personalisiert ist, insbesondere also die Identität des Benutzers eindeutig festgestellt ist, kann über diese Nahbereichskommunikationseinrichtungen diese Personalisierung auch auf Einrichtungen im Nahbereich übertragen werden, wodurch diese für den Benutzer zugreifbar werden. Beispielsweise ist es somit möglich, auf ein Zahlungssystem zugreifen zu können, wobei die personenrelevanten Daten mittels der Nahbereichskommunikationseinrichtung von der personalisierten Kommunikationseinrichtung auf die Zahlungseinrichtung übertragen werden. In vorteilhafter Weise ist somit an der Einrichtung wie bspw. der Zahlungseinrichtung eine Benutzerauthentifikation nicht erforderlich, diese wird von der personalisierten Kommunikationseinrichtung für die Dauer der Transaktion übernommen. In einer Weiterbildung ist es aber auch möglich, dass die Kommunikation mit Einrichtungen im Nahbereich über andere bekannte drahtlose und drahtgebundene Kommunikationsmittel wie bspw. USB, TCP/IP, GSM erfolgt, wobei ggf. Pegel-und Übertragungsprotokollumsetzter im Kommunikationsweg angeordnet sein können.

Zur Bedienung der Kommunikationseinrichtung und insbesondere zur Interaktion mit dieser ist eine Weiterbildung von Vorteil, bei der die Mensch-Maschine-Schnittstelle ein Anzeigemittel, ein Dateneingabemittel und eine Audio Ein- und Ausgabevorrichtung aufweist. Über diese Mensch-Maschine-Schnittstelle lassen sich die zum Teil recht komplexen Vorgänge zur Erfassung eines eindeutigen Benutzermerkmals wesentlichen vereinfachen, insbesondere ist bspw. über das Anzeigemittel eine zuverlässige Benutzerführung möglich.

Die Erfindung wird auch durch eine Authentifizierungseinrichtung gelöst, bei der im Datenspeicher eine Mehrzahl von Benutzerprofilen hinterlegt ist und dem Benutzerprofil ein eindeutiges Referenzmerkmal zugeordnet ist. Wenn jedes Benutzerprofil zumindest ein eindeutiges Referenzmerkmal aufweist, lässt sich eine eindeutige Zuordnung eines Benutzers zu einem Benutzerprofil und somit zu einer Mehrzahl im Benutzerprofil hinterlegter personenspezifischer Daten erreichen. Bevorzugt sind je Benutzerprofil mehrere eindeutige Referenzmerkmale zugeordnet, sodass bei der Authentifizierungsanforderung auch eine Mehrzahl unterschiedlicher Personenmerkmale erfasst und verglichen werden können, was insbesondere die Sicherheit und Zuverlässigkeit der Personalisierung deutlich erhöht.
Da eine zu personalisierende Kommunikationseinrichtung zumeist mit einem Kommunikationsnetzwerk kommunikativ verbunden werden soll ist gemäß einer Weiterbildung im Benutzerprofil eine eindeutige Teilnehmerkennung hinterlegt. Über diese Teilnehmerkennung wird ein Zugriff auf ein Kommunikationsnetzwerk möglich, wobei auch auf Dienste, die über dieses Kommunikationsnetzwerk angeboten werden, zugegriffen werden kann. Gegebenenfalls kann jedem Benutzerprofil eine Mehrzahl eindeutiger Teilnehmerkennungen zugeordnet sein, wodurch eine Auswahl des für den angeforderten Dienst günstigsten Dienstanbieters möglich ist. Somit kann fallweise entschieden werden, welcher Dienstanbieter für welchen Dienst verwendet wird, wobei die Personalisierung einer Kommunikationseinrichtung dann mit der jeweils entsprechenden Teilnehmerkennung des Benutzerprofils erfolgt.

Zur Erreichung bzw. Benützung einer Mehrzahl unterschiedlicher Dienste kann es erforderlich sein, dass der Benutzer anforderungsabhängig unterschiedlich genau identifiziert wird. Beispielsweise reicht für untergeordnete Dienste eine Eingabe einer alphanumerischen Kennung, während für hochsensible Dienste eine ggf. mehrfache biometrische Identifikation erforderlich ist. Von Vorteil ist daher eine Weiterbildung, bei der im Benutzerprofil ein hierarchisches Referenzmodel eindeutiger Merkmale hinterlegt ist. Durch dieses hierarchische Referenzmodel lässt sich eindeutig festlegen, für welche Dienste bzw. für welche Dienstklassen, welche eindeutigen Benutzermerkmale zu erfassen sind, um eine Personalisierung durchführen zu können und folglich den Dienst verwenden zu können. Im hierarchischen Referenzmodel kann jedoch auch hinterlegt sein, wie im Fall einer mangelhaften bzw. keiner Übereinstimmung eines erfassten Merkmals mit einem hinterlegten Referenzmerkmal weiter verfahren werden soll. So ist es bspw. denkbar, dass bei mangelhafter Übereinstimmung das, bezogen auf die Sicherheit nächst höhere Merkmal erfasst werden muss, um die mangelhafte Übereinstimmung ausgleichen zu können. Beispielsweise kann es durch widrige Umstände vorkommen, dass ein Fingerabdruck nur mangelhaft erfasst werden kann und somit der Vergleich mit einem hinterlegten Referenzmerkmal fehlschlägt. Anspruchsgemäß würde somit die hierarchisch höhere Authentifizierungsanforderung ausgelöst, was bspw. die Erfassung eines Sprachmusters umfasst. Ist der dann durchgeführte Vergleich erfolgreich, wurde der Mangel der ersten Erfassung behoben und eine Personalisierung kann bedenkenlos durchgeführt werden. Insbesondere lässt sich somit eine so genannte multi-factor-authentication realisieren, bei der eine Person über eine Kombination mehrerer eindeutiger Merkmale identifiziert und authentifiziert wird. Bislang war eine sehr starre Authentifikationsprozedur bekannt, bei der ein fest vorgegebener Authentifikationsvorgang erfolgreich durchgeführt werden musste. Mit der anspruchsgemäßen Weiterbildung kann nun ohne Verlust an Zuverlässigkeit, eine Personenauthentifikation wesentlich flexibler an die Sicherheitsanforderungen angepasst werden.

Aus Sicherheitsgründen kann es bspw. vorkommen, dass Dienstanbieter wie bzw. Kommunikationsnetzbetreiber benutzer- oder netzrelevante Daten nicht freigeben. In einer vorteilhaften Weiterbildung weist die Authentifizierungseinrichtung daher eine Schnittstelle zu einem Dienstanbieter auf, über die ein Zugriff auf benutzer- bzw. netzwerkrelevante Daten möglich ist, ohne Sicherheitsbereiche und Datenschutzbereiche des Dienstanbieters zu verletzen. Diese Ausbildung hat den weiteren ganz besonderen Vorteil, dass ein Dienstanbieter über die Schnittstelle die Authentizität der Kommunikationseinrichtung direkt bei der Authentifizierungseinrichtung nachprüfen kann. Beispielsweise könnte eine korrekt personalisierte Kommunikationseinrichtung manipuliert worden sein, wodurch die Personalisierung dauerhaft erhalten bleibt. Der Dienstanbieter kann nun bei einer Registrierungsanfrage der Kommunikationseinrichtung bei der Authentifizierungseinrichtung nachprüfen, ob die Personalisierung der Kommunikationseinrichtung gültig ist.

In einer Weiterbildung könnten sowohl die Authentifizierungseinrichtung, als auch der Dienstanbieter, eine externe Zertifizierungsinstanz zur Authorisierung eines Benutzers verwenden. Diese Instanz hat eine Mehrzahl von Benutzermerkmalen hinterlegt und bestätigt bei einer Authorisierungsanfrage, dass die angefragten Benutzerdaten mit hinterlegten Daten übereinstimmen. Der Vorteil einer derartigen Zertifizierungsinstanz liegt unter anderem darin, dass diese zumeist einen sehr hohen Sicherheitsstandard erfüllen und daher als sehr vertrauenswürdig eingestuft werden.

Von bedeutendem Vorteil ist eine Weiterbildung, bei der die Ablaufsteuerung ein Kryptographiemodul aufweist, denn somit kann eine bedeutende Steigerung der Sicherung der Personalisierung erreicht werden, da es nicht erforderlich ist, erfasste eindeutige Benutzermerkmale übertragen zu müssen bzw. die Übertragung geschützt werden kann. Werden erfasste eindeutige Merkmale unverschlüsselt übertragen besteht stets die Gefahr, dass diese Übertragung abgefangen wird und ggf. für missbräuchliche Zwecke eingesetzt wird. Mit einem Kryptographiemodul ist es nun möglich, Merkmale verschlüsselt zu übertragen und an der Authentifizierungseinrichtung wiederum eindeutig zu entschlüsseln. Auch ist es möglich, einen Schlüssel an die Kommunikationseinrichtung zu übertragen, mit dem diese ein erfasstes Merkmal verschlüsselt und nur das Ergebnis an die Authentifizierungseinrichtung überträgt. Auch an der Authentifizierungseinrichtung wird das Referenzmerkmal mit dem Schlüssel verschlüsselt und anschließend nur die beiden Ergebnisse der einzelnen Verschlüsselungen verglichen. Hierbei lassen sich Schlüsselkombinationen verwenden, bei denen vom Ergebnis nicht auf das ursprüngliche Merkmal rückgeschlossen werden kann.

Zum besseren Verständnis der Erfindung wird diese anhand der nachfolgenden Figuren näher erläutert.

Diese Figuren zeigen jeweils in stark schematisch vereinfachter Darstellung:
- Fig. 1: Ein Ablaufdiagramm des erfindungsgemäßen Verfahrens;
- Fig. 2: Eine Kommunikationseinrichtung und eine Authentifizierungseinrichtung, die das erfindungsgemäße Verfahren implementieren;
- Fig. 3: Eine mögliche Weiterbildung, bei der eine personalisierte Kommunikationseinrichtung als Genehmigungseinrichtung dient;
- Fig. 4: Mögliche weitere Ausbildungen der erfindungsgemäßen Verfahrens bzw. der Einrichtungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Es können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

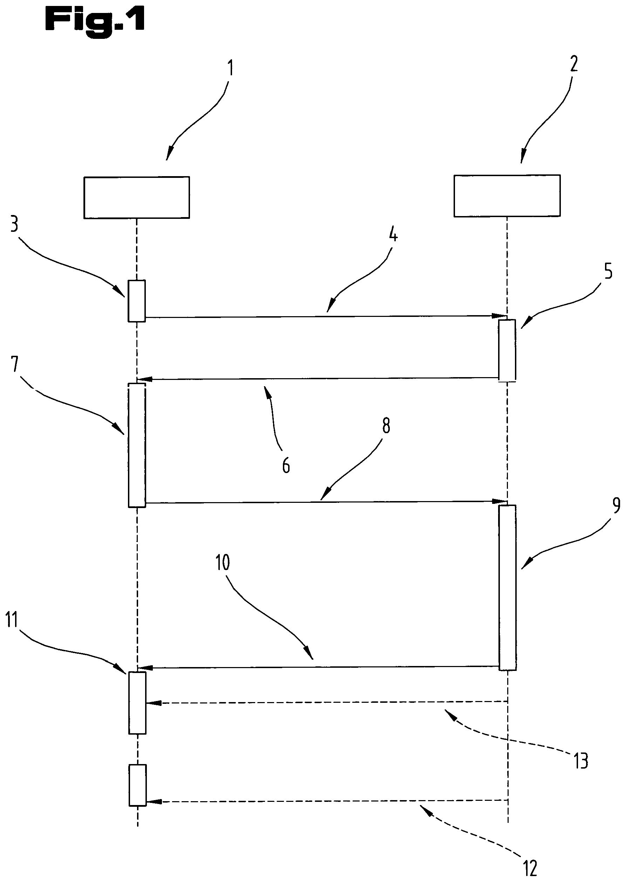

Fig. 1 zeigt den Ablauf des Verfahrens bzw. der Verfahrensschritte an der Kommunikationseinrichtung 1 und an der Authentifizierungseinrichtung 2. Vor der erstmaligen Verwendung ist die Kommunikationseinrichtung 1 nicht personalisiert und daher weder einem Kommunikationsnetz noch einem Benutzer zugeordnet. Die Kommunikationseinrichtung 1 ist jedoch in der Lage, über einen standardisierten bzw. universellen Kommunikationsweg mit einer Authentifizierungseinrichtung 2 kommunikativ in Kontakt zu treten. Wenn ein Benutzer eine Kommunikationseinrichtung für sich personalisieren möchte, löst dieser an der Kommunikationseinrichtung eine Personalisierungsanfrage 3 aus. Aufgabe dieser Personalisierungsanfrage ist es, die Kommunikationseinrichtung in einen definierten Zustand zu bringen, um das erfindungsgemäße Verfahren ausführen zu können und ggf. bei erfolgreicher Authentifikation des Benutzers die Personalisierung zu übernehmen. Insbesondere bedeutet dies, dass in einem ersten Schritt 4 eine Kommunikationsverbindung zwischen der Kommunikationseinrichtung 1 und der Authentifizierungseinrichtung 2 aufgebaut wird. Die Personalisierungsanfrage 3 kann bspw. einen Identifikationsschritt umfassen, in dem der Benutzer bspw. eine Gerätekennung angeben muss, um die Kommunikationseinrichtung 1 in Betrieb nehmen zu können. Beispielsweise könnte ein derartiger Identifikationsschritt darin bestehen, dass der Benutzer ein Sprachmerkmal und/oder eine persönliche Kennnummer angibt, die von der Kommunikationseinrichtung über einen standardisierten Kommunikationskanal an eine Prüfeinrichtung übermittelt werden, wobei die Prüfeinrichtung bei Übereinstimmung mit einem hinterlegten Referenzmuster, die Kommunikationseinrichtung zur Durchführung der Authentifikation freigibt. Die Prüfeinrichtung kann ggf. in die Authentifikationseinrichtung integriert sein.

Auf der Authentifizierungseinrichtung 2 wird nach Erhalt der Personalisierungsanfrage über die aufgebaute Kommunikationsverbindung 4 der Typ der anfragenden Kommunikationseinrichtung 1 geprüft. Gegebenenfalls kann die übertragene Personalisierungsanfrage auch eine so genannte Dienstkennung umfassen. Die Kommunikationseinrichtung 1 ist prinzipiell dazu ausgebildet, dem Benutzer mehrere Dienste anzubieten bzw. einen Zugang zu mehreren Diensten bereit zu stellen. Die Prüfung der Anfrage 5 umfasst bspw. die Ermittlung der technisch kommunikativen Möglichkeiten bzw. Vorrichtungen der Kommunikationseinrichtung 1 sowie die Festlegung des zu erfassenden Merkmals der Person zur Identifikation bzw. Authentifikation. Basierend auf dem Ergebnis dieser Überprüfung wird von der Authentifizierungseinrichtung 2 eine entsprechend parametrisierte Authentifizierungsanforderung an die Kommunikationseinrichtung 1 übertragen 6. Diese Authentifizierungsanforderung umfasst zumindest eine Anweisung an die Kommunikationseinrichtung 1, ein Merkmal des Benutzers zu erfassen. Bei technisch komplexeren Kommunikationseinrichtungen kann die Authentifizierungsanforderung jedoch auch noch die Information enthalten, welches Merkmal des Benutzers erfasst werden soll, wobei die Kommunikationseinrichtung anschließend die entsprechende Erfassungseinrichtung aktiviert. Im Sinne einer Sicherung der Übertragung zwischen der Kommunikationseinrichtung und der Authentifizierungseinrichtung kann mit der Authentifizierungsanforderung auch ein Schlüssel eines Verschlüsselungsverfahrens übertragen werden. Mit diesem Schlüssel ist es der Kommunikationseinrichtung möglich, dass erfasste Benutzermerkmal zu verschlüsseln und zu übertragen, wobei die Verschlüsselung ggf. derart ausgebildet sein kann, dass vom Ergebnis der Verschlüsselung nicht auf die ursprüngliche Information zurück geschlossen werden kann.

Im nächsten Verfahrensschritt wird an der Kommunikationseinrichtung mittels eines Erfassungsmittels ein eindeutiges Merkmal des Benutzers erfasst 7. Diese Merkmalserfassung kann bspw. durch Eingabe einer alphanumerischen Kennung, durch Erfassung eines Fingerabdrucks bzw. einer Stimminformation erfolgen. Das erfasste Merkmal wird anschließend an die Authentifizierungseinrichtung 2 übertragen 8, wobei abhängig von der technischen Ausbildung der Kommunikationseinrichtung 1, eine vorherige Bearbeitung des erfassten Merkmals möglich ist. Gegebenenfalls kann die Merkmalserfassung 7 noch Verfahrensschritte umfassen, in denen die erfassten Merkmalsdaten analysiert bzw. aufbereitet oder gegen missbräuchliche Verwendung gesichert werden. Erfasste persönliche Merkmale können ggf. ein großes Datenvolumen aufweisen, daher ist es von Vorteil, wenn die Datenmenge bereits an der Kommunikationseinrichtung reduziert wird und somit nur die wesentlichen Charakteristika bzw. das Ergebnis eines Sicherungsvorgangs an die Authentifizierungseinrichtung 2 zu übertragen ist 8. Diese vorteilhaften Weiterbildungen reduzieren einerseits das Datenvolumen bei der Übertragung und sichern gleichzeitig die Übertragung gegen missbräuchliches Abhören der Übertragung.

Das erfasste bzw. ggf. bereits aufbereitete Benutzermerkmal wird an der Authentifizierungseinrichtung 2 mit einem hinterlegten Merkmal verglichen 9. An der Authentifizierungseinrichtung 2 sind bevorzugt eine Mehrzahl von Referenzmerkmalen verschiedener Benutzer hinterlegt. Das von der Kommunikationseinrichtung 1 erfasste und an die Authentifizierungseinrichtung 2 übertragene 8 Merkmal wird nun mit den hinterlegten Merkmalen verglichen, wobei versucht wird, eine größtmögliche Übereinstimmung des erfassten mit einem hinterlegten Merkmal zu finden. Wird eine Übereinstimmung gefunden, wird eine Benutzerkennung an die Kommunikationseinrichtung 1 übertragen 10. Vor Übertragung der Benutzerkennung wird diese an der Authentifizierungseinrichtung 2 parametriert, insbesondere werden bspw. eine Netzwerkkennung sowie Netzwerkzugangsdaten hinterlegt, ggf. kann auch ein Referenzmerkmal in der Benutzerkennung hinterlegt werden. Durch die Übertragung der Benutzerkennung 10 wird die Kommunikationseinrichtung 1 eindeutig einem identifizierten und authentifizierten Benutzer zugeordnet. Insbesondere sind ab diesem Zeitpunkt alle Rechte und Pflichten des Benutzers im Bezug auf die personalisierte Kommunikationseinrichtung auf diese übertragen und aktiviert. Beispielsweise kann die Kommunikationseinrichtung ein Gerät zur mobilen Sprachkommunikation sein, wobei nach der Personalisierung bspw. die Vergebührung der Kommunikationseinrichtung 1 zugewiesen ist und somit die Verrechnung der angefallenen Gebühren über die, dem Benutzer zugeordneten Verrechnungskonten abgewickelt wird.

Die Personalisierung 11 kann nun auf unbegrenzte Zeit erfolgen, wobei jedoch auch eine zeitlich begrenzte Personalisierung möglich ist. Beispielsweise könnte die Personalisierung nach Ablauf einer Zeitspanne bzw. nach Erreichen einer festgelegten Anzahl von durchgeführten Dienstanforderungen von der Kommunikationseinrichtung 1 automatisch aufgehoben werden, wobei die übertragene Benutzerkennung 10 aus der Kommunikationseinrichtung 1 gelöscht wird. Es ist aber auch möglich, dass von der Authentifizierungseinrichtung 2 ausgehend, die Personalisierung aufgehoben wird 12. Zur Sicherung der eindeutigen Zuordnung eines Benutzers zur Kommunikationseinrichtung kann ggf. von der Authentifizierungseinrichtung 2 eine erneute Authentifizierungsanforderung 13 an die Kommunikationseinrichtung 1 übertragen werden. Diese erneute Authentifizierungsanforderung kann wiederum bspw. in regelmäßigen Abständen erfolgen oder wenn bspw. nach einer längeren Zeit einer Inaktivität der Kommunikationseinrichtung 1 eine Dienstanforderung erfolgt. Zur Sicherstellung, dass es sich bei der Person im Besitz bzw. im Zugriff der Kommunikationseinrichtung noch über die ursprünglich identifizierte und Authentifizierte Person handelt, kann mittels der erneuten Identifizierungsanforderung 13 die korrekte Personenzuordnung geprüft werden.

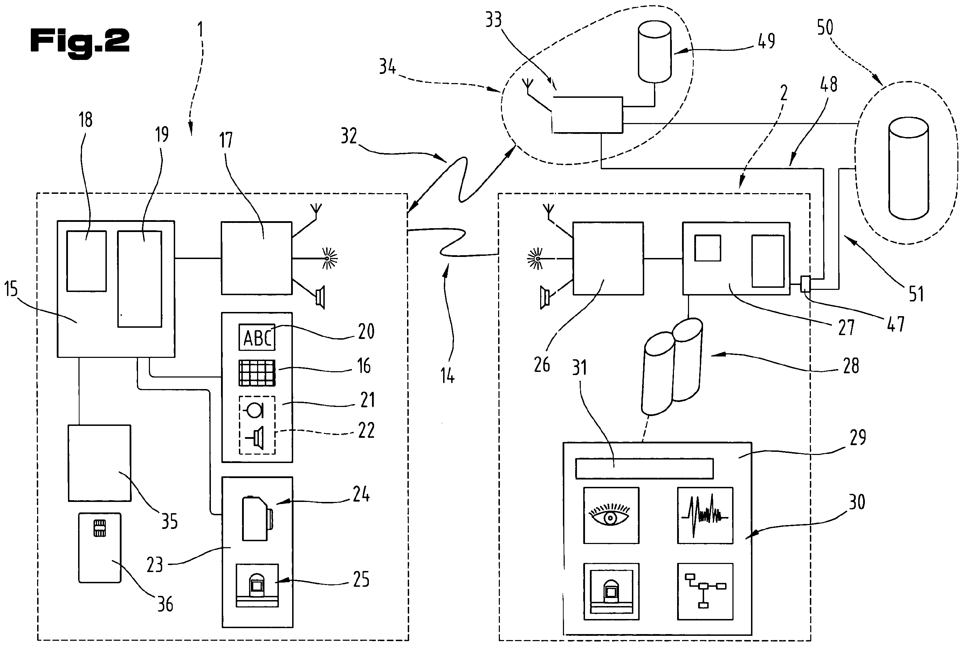

Fig. 2 zeigt schematisch die Kommunikationseinrichtung 1 sowie die Authentifizierungseinrichtung 2, die über eine Kommunikationsverbindung 14 miteinander kommunikativ verbunden sind. Die Kommunikationseinrichtung 1 umfasst zumindest eine Steuerungseinrichtung 15, eine Mensch-Maschine-Schnittstelle (MMS) 16, sowie eine Kommunikationsschnittstelle 17. Die Steuerungseinrichtung 15 umfasst außerdem einen Prozessor 18 und einen Schreib-Lese-Speicher 19. In einer Weiterbildung könnte der Speicher zumindest teilweise als nicht flüchtiger Speicher ausgebildet sein, um die hinterlegte Benutzerkennung auch nach einer erneuten Inbetriebnahme der Kommunikationseinrichtung 1 ohne erneute Authentifikation zur Verfügung zu haben. Zur Bedienung der Kommunikationseinrichtung bzw. Interaktion mit angeforderten bzw. bereitgestellten Diensten, ist bevorzugt eine Mensch-Maschine-Schnittstelle 16 vorhanden, die bspw. ein Anzeigemittel 20, eine alphanumerischen Eingabevorrichtung 21 und eine Audio Ein- bzw. Ausgabevorrichtung 22 umfasst. Die Erfassung eines eindeutigen Benutzermerkmals kann nun bspw. über die MMS 16 erfolgen, bspw. die als alphanumerische Tastatur ausgebildete Eingabevorrichtung 21, oder durch Erfassung eines Lautbilds mittels der Audio Ein- bzw. Ausgabevorrichtung 22. Es ist jedoch auch möglich, dass ein weiteres Erfassungsmittel 23 vorhanden ist, mit dem bspw. eine Gesichtsform oder die Iris des Auges erfasst werden kann, bevorzugt geschieht dies über eine optische Bilderfassungseinrichtung 24, oder es wird der Fingerabdruck über einen entsprechenden Scanner 25 erfasst.

Die Kommunikationseinrichtung 1 kann ferner ein Analysemodul und/oder ein Kryptographiemodul aufweisen. Diese Weiterbildungen ermöglichen eine Aufbereitung der erfassten Benutzermerkmale dahingehend, dass einerseits die zur Authentifizierungseinrichtung 2 zu übertragende Informationsmenge reduziert wird bzw. dass die Übertragung und/oder das erfasste Benutzermerkmal gegen missbräuchliche Beeinflussung gesichert werden.

Die Kommunikationsschnittstelle 17 ist dazu ausgebildet, mit einer entsprechenden Gegenstelle der Authentifizierungseinrichtung 2 eine Kommunikationsverbindung 14 herstellen zu können, wobei bevorzugt eine drahtlose, weit reichende Kommunikationsschnittstelle eingesetzt wird. Die Kommunikationsschnittstelle 17 kann nun bspw. durch ein Sende- und Empfangsmittel für elektromagnetische Strahlung sowohl im Hochfrequenz als auch im optischen Bereich gebildet sein, auch ist eine Sende- und Empfangseinrichtung für hochfrequente Schallübertragung denkbar. Da die Authentifizierungseinrichtung 2 bevorzugt mit einer Mehrzahl von Kommunikationseinrichtungen 1 kommunizieren soll, wird die Kommunikationsverbindung 14, insbesondere die Kommunikationsschnittstellen 17 der Kommunikationseinrichtung 1 sowie die Kommunikationsschnittstelle 26 der Authentifizierungseinrichtung 2 derart ausgebildet sein, dass ein möglichst großer örtlicher Abstand zwischen der Kommunikationseinrichtung 1 und der Authentifizierungseinrichtung 2 erreichbar ist. Die Kommunikationsschnittstelle 26 ist ähnlich wie die Kommunikationsschnittstelle 17 dazu ausgebildet, eine Kommunikationsverbindung 14 zwischen den Einrichtungen 1, 2 herstellen zu können. Zur Abarbeitung des erfindungsgemäßen Verfahrens zur Personalisierung einer Kommunikationseinrichtung bzw. zur Analyse und Vergleich erfasster eindeutiger Benutzermerkmale weist die Authentifizierungseinrichtung 2 ferner eine Ablaufsteuerung 27 auf, die ggf. einen Prozessor und ein Speichermittel umfasst. In einem schreib- und lesbaren und insbesondere nicht flüchtigen Datenspeicher 28 sind bevorzugt eine Mehrzahl von Benutzerkennungen 29 hinterlegt, wobei für jede Benutzerkennung zumindest ein eindeutiges Referenzmerkmal 30 hinterlegt ist.

Beim erfindungsgemäßen Verfahren zur Personalisierung einer Kommunikationseinrichtung 1 wird von dieser ein eindeutiges Benutzermerkmal erfasst und über die Kommunikationsverbindung 14 an die Authentifizierungseinrichtung 2 übertragen. Hier wird es bspw. von einer Vergleichseinrichtung die ggf. durch die Ablaufsteuerung 27 gebildet ist bzw. in dieser integriert ist, mit im Datenspeicher 28 hinterlegten Referenzmerkmalen verglichen. Bei Übereinstimmung mit einem hinterlegten Merkmal wird eine Benutzerkennung erstellt, wobei benutzerspezifische Daten des Benutzerprofils 29, bspw. auch eine Teilnehmerkennung 31, in die Benutzerkennung integriert werden bzw. diese entsprechend parametriert wird. Die Benutzerkennung kann ggf. auch ein Referenzmerkmal 30 aufweisen, um eine erneute bzw. wiederholte Authentifikation auf der Kommunikationseinrichtung 1 zu ermöglichen. Die parametrierte Benutzerkennung wird an die Kommunikationseinrichtung übertragen und im Speicher 19 abgelegt. Mittels dieser Benutzerkennung, insbesondere mit der parametrierten Teilnehmerkennung, kann nun die Steuerungseinrichtung 15 bzw. die Kommunikationsschnittstelle 17 eine Kommunikationsverbindung 32 mit einer Kommunikationsgegenstelle 33 eines Kommunikationsnetzbetreibers herstellen und die Kommunikationseinrichtung 1 im Kommunikationsnetzwerk 34 registrieren. Solange die Kommunikationseinrichtung personalisiert ist, also solange eine Benutzerkennung im Speicher hinterlegt ist, ist die Zuordnung bzw. die Kommunikationsverbindung 32 aufrecht und die Vergebührung der Dienstbereitstellung bzw. Dienstverwendung erfolgt über die im Benutzerprofil 29 hinterlegten personenspezifischen Verrechnungs- und Kommunikationsdaten.

Gegebenenfalls kann an der Kommunikationseinrichtung 1 noch eine Datenträgerleseeinrichtung 35 vorhanden sein, die bevorzugt mit der Steuerungseinrichtung 15 kommunikativ verbunden ist. In der Datenträgerleseeinrichtung 35 lässt sich ein personalisiertes Teilnehmerkennungsmodul 36 anordnen, bspw. durch Einschieben in die Lesevorrichtung, wobei die im Teilnehmerkennungsmodul hinterlegten Zugriffsdaten ausgelesen werden und die Kommunikationseinrichtung wiederum in einem Kommunikationsnetzwerk 34 registriert wird. Über diese Weiterbildung kann die Kommunikationseinrichtung für einen ersten Benutzer registriert werden, wobei die personenspezifischen Registrierungsdaten am Teilnehmerkennungsmodul 36 hinterlegt sind. Gleichzeitig ist es jedoch möglich diese Personalisierung vorübergehend aufzuheben, so dass sich ein weiterer Benutzer über die Authentifizierungseinrichtung 2 identifiziert und authentifiziert, worauf eine Benutzerkennung an die Kommunikationseinrichtung übertragen wird, und im Speicher hinterlegt wird. Dadurch wird die vorherrschende Registrierung aufgehoben und vorübergehend die Kommunikationseinrichtung für den zweiten Benutzer personalisiert. Somit ist es mit dem erfindungsgemäßen Verfahren möglich, dass neben einer Personalisierung über ein Teilnehmerkennungsmodul 36, vorübergehend eine Personalisierung für einen weiteren Benutzer möglich ist.

In der Figur ist eine weiter mögliche Variante dargestellt, wie auf persönliche Referenzdaten zugegriffen werden kann. Gegebenenfalls kann es vom Dienstanbieter bzw. Betreiber der Kommunikationsgegenstelle 33 nicht gestattet sein, personenbezogene Daten außerhalb des jeweiligen Sicherheitsbereichs abzulegen. In einer vorteilhaften Weiterbildung könnte daher die Authentifizierungseinrichtung 2, insbesondere die Ablaufsteuerung 27, eine Schnittstelle 47 aufweisen, über die eine direkte Kommunikationsverbindung 48 mit der Kommunikationsgegenstelle 33 bzw. dem Dienstbetreiber hergestellt werden kann. Der Vergleich des erfassten und an die Authentifizierungseinrichtung 2 übertragenen eindeutigen Merkmals erfolgt dann direkt bei der bzw. durch die Kommunikationsgegenstelle 33, durch Zugriff auf die in einem Datenspeicher 49 abgelegten Referenzdaten.

Es besteht jedoch auch die Möglichkeit der Benutzerauthentifikation mittels einer externen Zertifizierungsinstanz 50. Die Authentifizierungseinrichtung 2 könnte über die Schnittstelle 47 und eine Kommunikationsverbindung 51 die erfassten Personendaten von der Zertifizierungsinstanz prüfen lassen. Nach erfolgter Authentifizierung wird eine Benutzerkennung an die Kommunikationseinrichtung 1 übertragen, wobei sich diese anschließend im Kommunikationsnetzwerk 34 registriert. Die Kommunikationsgegenstelle 33 kann nun ihrerseits eine Gegenprüfung durchführen um sicher zu stellen, dass die Authentifizierung korrekt durchgeführt wurde. Dazu kann die Kommunikationsgegenstelle ebenfalls bei der Zertifizierungsstelle 50 eine Prüfung initiieren, um somit sicher zu stellen, dass der Benutzer, der von der Authentifizierungseinrichtung 2 korrekt authentifiziert wurde, auch der ist, dessen Kommunikationseinrichtung 1 sich aktuell im Kommunikationsnetzwerk 34 der Kommunikationsgegenstelle 33 registrieren will.

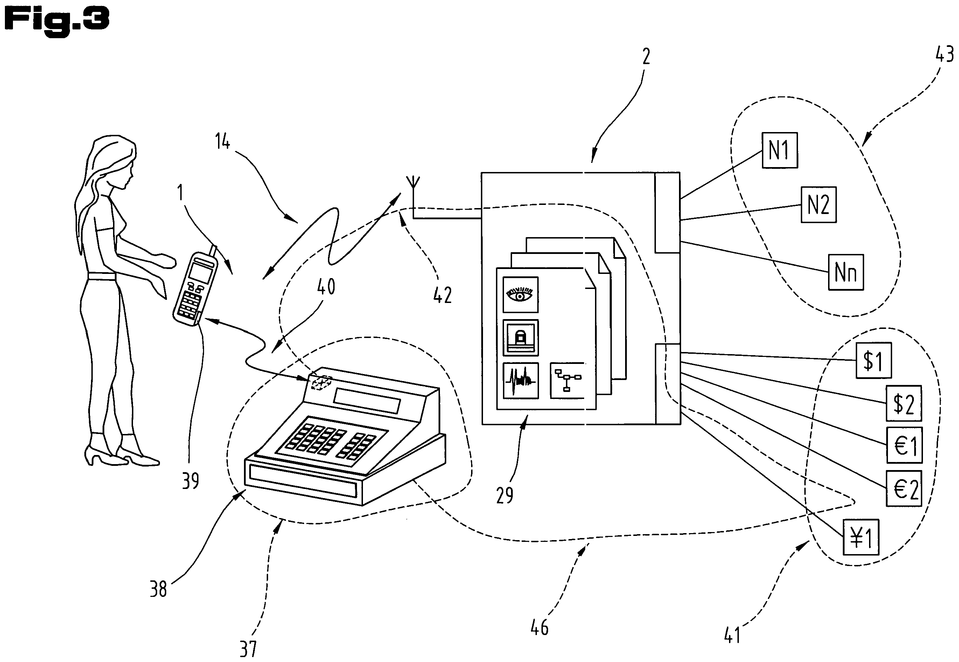

Fig. 3 zeigt eine weitere mögliche Ausbildung bei der das erfindungsgemäße Verfahren bzw. die Kommunikationseinrichtung und die Authentifizierungseinrichtung eingesetzt werden können. Im dargestellten Fall wird die personalisierte Kommunikationseinrichtung 1 dazu verwendet, am Ort eines Dienstanbieters 37, über die Authentifizierungseinrichtung 2 einen Dienst auszulösen bzw. die Ausführung und/oder Vergebührung eines Dienstes zu genehmigen. Beim Abruf bzw. Verwendung des Dienstes kann es bspw. erforderlich sein, dass der Benutzer für den in Anspruch genommenen Dienst bzw. Service eine Gebühr entrichtet, die ggf. über seine, im Benutzerprofil 29 hinterlegte Vergebührungsinformation beglichen wird. Der Benutzer könnte nun bspw. ein Verfahren oder einen Dienst in Anspruch nehmen und nach Beendigung des Vorgangs an einer Verrechnungseinrichtung 38 einen Bezahlvorgang initiieren. Die Kommunikationseinrichtung 1 weist bspw. eine Nahfeldkommunikationseinrichtung 39 auf, über die eine Kommunikationsverbindung 40 mit der Verrechnungseinrichtung 28 hergestellt wird. Für Dienste mit geringer sicherheitskritischer Anforderung könnte der Vorgang des Präsentierens der personalisierten Kommunikationseinrichtung 1 im Nahbereich der Verrechnungseinrichtung 38, insbesondere durch die hergestellte Kommunikationsverbindung 40 ausreichen, um einen Verrechnungs- bzw. Zahlvorgang durchführen zu können. Für sicherheitskritisch höherwertige Dienstverrechnungen kann es bspw. erforderlich sein, dass der Benutzer einen Verrechnungsvorgang bei einem Verrechnungsdienstanbieter 41 auslöst. Dazu kann bspw. die Verrechnungseinrichtung 38 über die Kommunikationsverbindung 40 und die personalisierte Kommunikationseinrichtung 1, eine Dienstanfrage an einem möglichen Anbieter 41 auslösen, wobei dieser über die Authentifizierungseinrichtung eine eindeutige Kennung des anfragenden Benutzers mitgeteilt bekommt. Der angefragte Verrechnungsdienstanbieter 41 kann nun aufgrund der eindeutigen Identifizierung des anfragenden Benutzers die Vergebührung anweisen und diese Verrechnungsanweisung über einen ersten Kommunikationsweg 42, also die Authentifizierungseinrichtung 2, die Kommunikationsverbindung 14, die Kommunikationseinrichtung 1 und über die Kommunikationsverbindung 40 an die Verrechnungseinrichtung 38 übermitteln. Es ist jedoch auch ein anderer Weg der Übermittlung der Zahlungsfreigabe möglich, bspw. kann vom Verrechnungsdienstanbieter 41 eine direkte Kommunikationsverbindung 46 zur Verrechnungseinrichtung 38 hergestellt werden und Verrechnungsfreigabe auf diesem Weg übermittelt werden.

Es ist jedoch auch eine weitere Ausbildung möglich, bei der die Personalisierungsanfrage der Kommunikationseinrichtung 1 von der Authentifizierungseinrichtung 2 derart ausgewertet wird, dass jener Dienstanbieter 43 ausgewählt wird, der den aktuell angefragten Dienst am kostengünstigsten zur Verfügung stellt. Gegebenenfalls kann die Kommunikationseinrichtung 1 noch über eine Positionsortungseinrichtung verfügen, wodurch die Auswahl des günstigsten Anbieters 43 auch noch Standortinformation mitberücksichtigen könnte, wodurch der Benutzer bspw. eine Information an der Mensch-Maschine-Schnittstelle angezeigt bekommen könnte, wo in seiner Umgebung der angefragte Dienst am kostengünstigsten verfügbar ist.

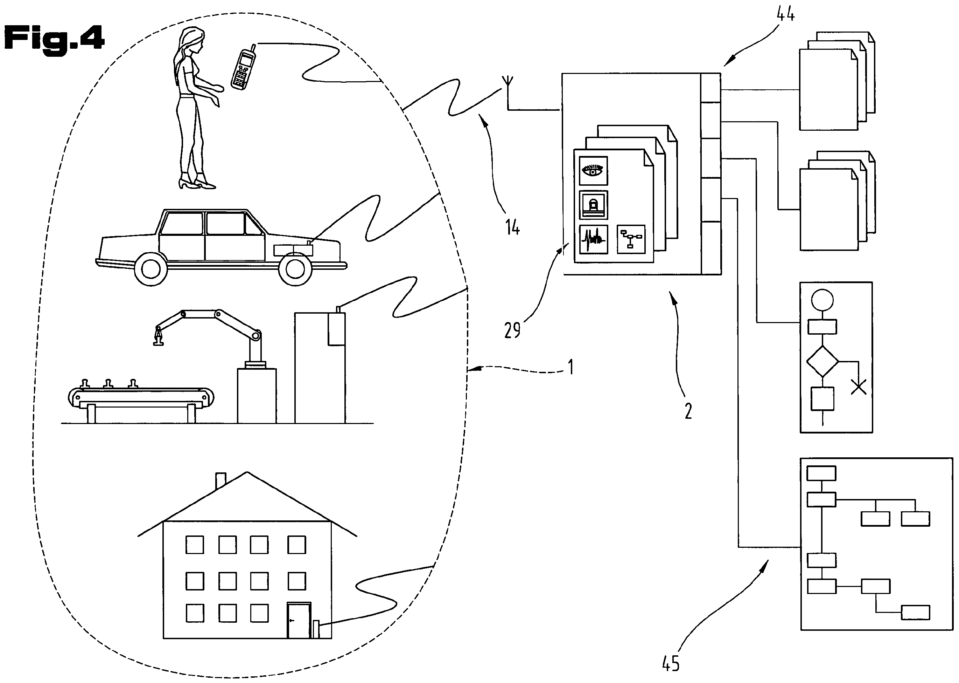

Fig. 4 zeigt eine weitere mögliche Ausbildung bei der das erfindungsgemäße Verfahren in vorteilhafter Weise angewandt werden könnte. Eine Mehrzahl von Kommunikationseinrichtungen 1 sind über eine Kommunikationsverbindung 14 mit der Authentifizierungseinrichtung 2 verbunden bzw. führen über diese die Personalisierung durch. Die Kommunikationseinrichtung kann nun bspw. eine Vorrichtung zur Mobilkommunikation sein, insbesondere sind hierbei Mobiltelefone sowie Mobilfunkeinrichtungen mit umfasst.

Es ist aber auch möglich, dass die Kommunikationseinrichtung Teil der Betriebssteuerung eines Fahrzeugs ist, wobei die Kommunikationseinrichtung mit der Steuerungselektrik eines Kraftfahrzeugs verbunden sein kann und eine Inbetriebnahme erst nach erfolgter Personalisierung der Kommunikationseinrichtung gestattet. Auf diese Weise ließe sich bspw. eine Mietwagenflotte betreiben, bei der die Inbetriebnahme und Vergebührung der Benutzung des Fahrzeugs über das erfindungsgemäße Verfahren abgewickelt wird.

Ebenfalls ist es möglich, dass die Kommunikationseinrichtung Teil einer Steuerung einer Fertigungs- bzw. Produktionseinrichtung ist, die sich erst nach erfolgreicher Identifikation und Authentifikation eines Benutzers in Betrieb nehmen lässt. Beispielsweise ist es bei einer derartigen Ausbildung möglich, eine Berichterstattung zur Qualitätssicherung bzw. zur Produktionsdatenerfassung zusammen mit der Personalisierung einem Benutzer eindeutig zuordnen zu können. Für den Betreiber einer derartigen Einrichtung ist es somit in vorteilhafter Weise möglich, die produzierte Charge genau einem identifizierten Benutzer zuordnen zu können.

Ebenfall denkbar ist eine Ausbildung, bei der Kommunikationseinrichtung Teil eines Zutrittsicherungssystems, bspw. einer Gebäudesicherung, ist. Erst nach korrekter Identifikation und Authentifikation eines Benutzers, ist diesem der Zutritt zur Sicherungszone gestattet, wobei sich weitere Zutrittsszenarien sowie Sicherungsbereiche realisieren lassen.
Die Authentifizierungseinrichtung 2 ist über eine Mehrzahl von Schnittstellen 44 mit einer Mehrzahl von Dienstanbietern 45 kommunikativ verbunden. Entsprechend des Einsatzgebiets der Kommunikationseinrichtung 1 können die Dienstanbieter bspw. Kommunikations-, Daten- sowie Informationsdienste bereitstellen, die Kommunikationseinrichtung 1 wird in diesem Fall für einen Dienst freigeschaltet bzw. in einem Netzwerk registriert. Es ist aber auch möglich, dass die Kommunikationseinrichtung nach erfolgreicher Personalisierung die Inbetriebnahme bzw. Benützung einer weiteren Einrichtung durch den authentifizierten Benutzer ermöglicht. Ebenso kann die personalisierte Kommunikationseinrichtung eine Art Schlüssel ausbilden, um dem Benutzer eine Bewegung bzw. zu einem Zutritt in gesicherten Abschnitten zu ermöglichen.

Die dargestellten Beispiele sind mögliche Ausbildungen, bei denen das erfindungsgemäße Verfahren dazu eingesetzt werden kann, eine beliebige Kommunikationseinrichtung über die ein Dienst bereitgestellt wird bzw. ein Dienst erreichbar ist, oder eine weitere Einrichtung aktiviert werden kann, zumindest vorübergehend einem Benutzer eindeutig zuordnen zu können und ggf. die für die Benützung des Dienstes anfallenden Gebühren eindeutig einem Benutzer anlasten zu können. Neben den dargestellten Beispielen sind jedoch auch weitere Ausbildungen denkbar, insbesondere eignet sich das Verfahren für all jene Kommünikationseinrichtung, bei denen nur gelegentlich eine eindeutige Benutzerzuordnung erforderlich ist, wobei aber insbesondere die Möglichkeit bestehen soll, die Vorrichtung für eine Mehrzahl unterschiedlicher Benutzer anbieten zu können bzw. von diesen verwendet werden zu können.

Die Ausführungsbeispiele zeigen mögliche Ausführungsvarianten des Verfahrens, der Kommunikationseinrichtung und der Authentifizierungseinrichtung wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In der Fig. 2, 3 und 4 sind weitere und gegebenenfalls für sich eigenständige Ausführungsformen gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Der Ordnung halber sei abschließend daraufhingewiesen, dass zum besseren Verständnis des Ablaufs des Verfahrens bzw. des Aufbaus der Kommunikationseinrichtung und der Authentifizierungseinrichtung diese bzw. deren Bestandteile teilweise unmaßstäblich und/ oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1 bis 4 gezeigte Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

**Bezugszeichenaufstellung**

| | | | |
|---|---|---|---|
| 1 | Kommunikationseinrichtung | 36 | Teilnehmerkennungsmodul |
| 2 | Authentifizierungseinrichtung | 37 | Dienstanbieter |
| 3 | Personalisierungsanorderung | 38 | Verrechnungseinrichtung |
| 4 | Aufbau einer Kommunikationsverbindung | 39 | Nahbereichskommunikationseinrichtung |
| 5 | Prüfen der Anfrage | 40 | Kommunikationsverbindung |
| | | | |
| 6 | Übertragen der Authentifizierungsanfrage | 41 | Verrechnungsdienstanbieter |
| 7 | Merkmal erfassen | 42 | Kommunikationsweg |
| 8 | Übertragen des erfassten Merkmals | 43 | Dienstanbieter |
| 9 | Vergleich mit dem hinterlegten Merkmal | 44 | Schnittstelle |
| | | 45 | Dienstanbieter |
| 10 | Übertragen der Benutzerkennung | | |
| | | 46 | Kommunikationsweg. |
| 11 | Personalisierung | 47 | Schnittstelle |
| 12 | Personalisierung aufheben | 48 | Kommunikationsverbindung |
| 13 | Erneute Authentifizierungsanfrage | 49 | Datenspeicher |
| 14 | Kommunikationsverbindung | 50 | Zertifizierungsinstanz |
| 15 | Steuerungseinrichtung, Verarbeitungseinrichtung | | |
| | | | |
| 16 | Mensch-Maschine-Schnittstelle (MMS) | | |
| 17 | Kommunikationsschnittstelle | | |
| 18 | Prozessor | | |
| 19 | Speicher | | |
| 20 | Anzeigemittel | | |
| | | | |
| 21 | Eingabevorrichtung | | |
| 22 | Audio Ein- Ausgabevorrichtung | | |
| 23 | Erfassungsmittel | | |
| 24 | Optische Bilderfassungsvorrichtung | | |
| 25 | Fingerabdruckscanner | | |
| | | | |
| 26 | Kommunikationsschnittstelle | | |
| 27 | Ablaufsteuerung | | |
| 28 | Datenspeicher | | |
| 29 | Benutzerprofil | | |
| 30 | Referenzmerkmal | | |
| | | | |
| 31 | Teilnehmerkennung | | |
| 32 | Kommunikationsverbindung | | |
| 33 | Kommunikationsgegenstelle | | |
| 34 | Kommunikationsnetzwerk | | |
| 35 | Datenträgerleseeinrichtung | | |

## Patentansprüche

1. Verfahren zur zeitweisen Personalisierung einer mobilen Kommunikationseinrichtung in einem Kommunikationsnetzwerk, um einem identifizierten und authentifizierten Benutzer einen Zugriff auf Dienste eines Kommunikationsnetzwerkes zu ermöglichen, umfassend die Schritte:
- Herstellen einer Kommunikationsverbindung zwischen der mobilen Kommunikationseinrichtung und einer Authentifizierungseinrichtung, wobei die mobile Kommunikationseinrichtung mit einem Kommunikationsnetzwerk kommunikativ verbunden wird;
- Übertragen einer Authentifizierungsanforderung von der Authentifizierungseinrichtung an die mobile Kommunikationseinrichtung;
- Erfassen eines eindeutigen Benutzermerkmals, ausgewählt ist aus der Gruppe umfassend biometrisches Benutzermerkmal, alphanumerische Kennung oder persönliches Verhaltensmuster, durch ein Erfassungsmittel der mobilen Kommunikationseinrichtung;
- Übertragen des erfassten eindeutigen Benutzermerkmals an die Authentifizierungseinrichtung;
- Vergleich des übertragenen eindeutigen Benutzermerkmals mit einem in der Authentifizierungseinrichtung hinterlegten Referenzmerkmal aus einer Mehrzahl von Referenzmerkmalen verschiedener Benutzer; bei Übereinstimmung zwischen dem übertragenen eindeutigen Benutzermerkmal und dem hinterlegten Referenzmerkmal, Übertragen einer Benutzerkennung an die mobile Kommunikationseinrichtung, wobei die mobile Kommunikationseinrichtung mittels der Benutzerkennung in einem Kommunikationsnetzwerk registriert wird, indem nach Identifikation und Authentifikation des Benutzers zusammen mit der Benutzererkennung eine Teilnehmerkennung in der mobilen Kommunikationseinrichtung hinterlegt wird, über die ein Zugriff auf Dienste eines Kommunikationsnetzwerk ermöglicht wird, **dadurch gekennzeichnet, dass** in der Benutzererkennung zusätzlich ein hierarchisches Referenzmodel eindeutiger Merkmale hinterlegt ist, das festlegt, für welche Dienste welche eindeutigen Benutzermerkmale zu erfassen sind, um eine Personalisierung der Kommunikationseihrichtung durchzuführen und den Dienst verwenden zu können, wobei im hierarchischen Referenzmodel hinterlegt ist, dass bei mangelhafter Übereinstimmung ein bezogen auf die Sicherheit hierarchisch höheres Benutzermerkmal erfasst wird, um die mangelhafte Übereinstimmung ausgleichen zu können.

2. Verfahren nach Anspruch 1, **dadurch gekennzeichnet, dass** das Referenzmerkmal an die mobile Kommunikationseinrichtung übertragen und auf dieser temporär abgelegt wird.

3. Verfahren nach einem der Ansprüche 1 oder 2, **dadurch gekennzeichnet, dass** das erfasste eindeutige Benutzermerkmal von einer Verarbeitungseinrichtung an der mobilen Kommunikationseinrichtung analysiert wird.

4. Verfahren nach einem der Ansprüche 1 bis 3 **dadurch gekennzeichnet, dass** das eindeutige Benutzermerkmal vor der Übertragung an die Authentifizierungseinrichtung verschlüsselt wird.

5. Verfahren nach einem der Ansprüche 1 bis 4, **dadurch gekennzeichnet, dass** bei mangelhafter bzw. keiner Übereinstimmung des erfassten eindeutigen Benutzermerkmals mit dem hinterlegten Referenzmerkmal die in der mobilen Kommunikationseinrichtung hinterlegte Benutzerkennung entweder deaktiviert und/oder gelöscht wird, oder eine weitere Authentifizierungsanforderung an die mobile Kommunikationseinrichtung übertragen wird.

6. Verfahren nach einem der Ansprüche 1 bis 5, **dadurch gekennzeichnet, dass** der Vergleich des übertragenen eindeutigen Benutzermerkmals mit dem hinterlegten Referenzmerkmal unscharf durchgeführt wird, um eine Wahrscheinlichkeitsverteilung für den Grad der Übereinstimmung zu erhalten.

7. Verfahren nach einem der Ansprüche 1 bis 6, **dadurch gekennzeichnet, dass** bei mangelhafter oder keiner Übereinstimmung des erfassten eindeutigen Benutzermerkmals mit dem hinterlegten Referenzmerkmal die in der mobilen Kommunikationseinrichtung hinterlegte Benutzererkennung deaktiviert und/oder gelöscht wird.

8. Verfahren nach einem der Ansprüche 1 bis 7, **dadurch gekennzeichnet, dass** die Authentifizierungsanforderung nach einem Sicherheitshierarchieprofil durchgeführt wird.

9. Verfahren nach einem der Ansprüche 1 bis 8, **dadurch gekennzeichnet, dass** die Identifikation und Authentifikation des Benutzers über eine Kombination mehrerer eindeutiger Benutzermerkmale erfolgt.

10. Verfahren nach einem der Ansprüche 1 bis 9, **dadurch gekennzeichnet, dass** nach Ablauf einer vorgebbaren Zeit die Registrierung der Kommunikationseinrichtung im Kommunikationsnetzwerk gelöscht wird.

11. Verfahren nach einem der Ansprüche 1 bis 10, **dadurch gekennzeichnet, dass** als mobile Kommunikationseinrichtung ein Mobiltelefon eingesetzt wird.

## Claims

1. Method for temporarily personalising a mobile communication device in a communication network in order to allow an identified and authenticated user access to services of a communication network, comprising the steps of:
- establishing a communication connection between the mobile communication device and an authentication device, the mobile communication device being communicatively connected to a communication network;
- transmitting an authentication request from the authentication device to the mobile communication device;
- detecting a unique user feature selected from the group comprising a biometric user feature, alphanumeric identifier or personal behaviour pattern, by means of a detection means of the mobile communication device;
- transmitting the detected unique user feature to the authentication device;
- comparing the transmitted unique user feature with a reference feature from a plurality of reference features of various users, which reference feature is stored in the authentication device;
transmitting a user identifier to the mobile communication device in the event of a match between the transmitted unique user feature and the stored reference feature, the mobile communication device being registered in a communication network by means of the user identifier by, after identifying and authenticating the user together with the user identifier, storing a subscriber identifier in the mobile communication device, via which subscriber identifier access to services of a communication network is made possible, **characterised in that** a hierarchical reference model of unique features is also stored in the user identifier, which model determines which unique user features are to be detected for which services in order to personalise the communication device and be able to use the service, it being stored in the hierarchical reference model that, in the event of a poor match, a user feature that is hierarchically higher with respect to security is detected in order to compensate for the poor match.

2. Method according to claim 1, **characterised in that** the reference feature is transmitted to the mobile communication device and temporarily stored thereon.

3. Method according to either claim 1 or claim 2, **characterised in that** the detected unique user feature is analysed by a processing device on the mobile communication device.

4. Method according to any of claims 1 to 3, **characterised in that** the unique user feature is encrypted prior to transmission to the authentication device.

5. Method according to any of claims 1 to 4, **characterised in that**, in the event of a poor match or no match between the detected unique user feature and the stored reference feature, the user identifier stored in the mobile communication device is either disabled and/or deleted, or a further authentication request is transmitted to the mobile communication device.

6. Method according to any of claims 1 to 5, **characterised in that** the transmitted unique user feature is compared with the stored reference feature in a fuzzy manner in order to obtain a probability distribution for the degree of agreement.

7. Method according to any of claims 1 to 6, **characterised in that**, in the event of a poor match or no match between the detected unique user feature and the stored reference feature, the user identifier stored in the mobile communication device is disabled and/or deleted.

8. Method according to any of claims 1 to 7, **characterised in that** the authentication request is carried out in accordance with a security hierarchy profile.

9. Method according to any of claims 1 to 8, **characterised in that** the user is identified and authenticated via a combination of a plurality of unique user features.

10. Method according to any of claims 1 to 9, **characterised in that** the registration of the communication device in the communication network is deleted after a predetermined time.

11. Method according to any of claims 1 to 10, **characterised in that** a mobile telephone is used as the mobile communication device.

## Revendications

1. Procédé de personnalisation temporaire d'un dispositif mobile de communication dans un réseau de communication, de telle sorte qu'un utilisateur identifié et authentifié puisse avoir un accès à des services d'un réseau de communication, incluant les étapes consistant à :
- établir une connexion de communication entre le dispositif mobile de communication et un dispositif d'authentification, ledit dispositif mobile de communication étant mis en liaison de communication avec un réseau de communication ;
- transmettre une demande d'authentification audit dispositif mobile de communication, à partir dudit dispositif d'authentification ;
- détecter, par l'intermédiaire d'un moyen de détection dudit dispositif mobile de communication, un attribut distinctif univoque de l'utilisateur sélectionné au sein du groupe comprenant un attribut distinctif biométrique dudit utilisateur, un identifiant alphanumérique ou un modèle comportemental personnel ;
- transmettre, audit dispositif d'authentification, ledit attribut distinctif univoque de l'utilisateur après qu'il a été détecté ;
- comparer ledit attribut distinctif univoque de l'utilisateur, après qu'il a été transmis, à un attribut distinctif de référence mémorisé dans ledit dispositif d'authentification, au sein d'une pluralité d'attributs distinctifs de référence de différents utilisateurs ; transmettre un identifiant de l'utilisateur audit dispositif mobile de communication lorsque l'attribut distinctif univoque dudit utilisateur, à l'état transmis, est en concordance avec l'attribut distinctif de référence mémorisé, lequel dispositif mobile de communication est enregistré dans un réseau de communication au moyen dudit identifiant de l'utilisateur, sachant qu'un identifiant d'abonné, permettant un accès à des services d'un réseau de communication, est mémorisé dans ledit dispositif mobile de communication conjointement audit identifiant de l'utilisateur, après identification et authentification dudit utilisateur, **caractérisé par** la mémorisation additionnelle, dans l'identifiant de l'utilisateur, d'un modèle de référence hiérarchique d'attributs distinctifs univoques par lequel sont fermement établis les attributs distinctifs univoques d'utilisateurs qui doivent être détectés, et pour quels services ils doivent l'être, afin de pouvoir effectuer une personnalisation du dispositif mobile de communication et de pouvoir utiliser le service, ledit modèle de référence hiérarchique consignant le fait qu'un attribut distinctif d'utilisateur de rang hiérarchique plus élevé, en matière de sécurité, est détecté en cas de concordance lacunaire pour pouvoir compenser ladite concordance lacunaire.

2. Procédé selon la revendication 1, **caractérisé par le fait que** l'attribut distinctif de référence est transmis au dispositif mobile de communication et est stocké provisoirement sur ce dernier.

3. Procédé selon l'une des revendications 1 ou 2, **caractérisé par le fait que** l'attribut distinctif univoque d'utilisateur, à l'état détecté, est analysé par un dispositif de traitement installé sur le dispositif mobile de communication.

4. Procédé selon l'une des revendications 1 à 3, **caractérisé par le fait que** l'attribut distinctif univoque d'utilisateur est crypté préalablement à la transmission au dispositif d'authentification.

5. Procédé selon l'une des revendications 1 à 4, **caractérisé par le fait que**, dans le cas où l'attribut distinctif univoque d'utilisateur, à l'état détecté, présente une concordance respectivement lacunaire ou inexistante avec l'attribut distinctif de référence mémorisé, l'identifiant d'utilisateur mémorisé dans le dispositif mobile de communication est désactivé et/ou effacé, ou bien une autre demande d'authentification est transmise audit dispositif mobile de communication.

6. Procédé selon l'une des revendications 1 à 5, **caractérisé par le fait que** la comparaison de l'attribut distinctif univoque d'utilisateur, à l'état transmis, avec l'attribut distinctif de référence mémorisé, est effectuée de manière imprécise en vue d'obtenir une distribution de probabilité relativement au degré de concordance.

7. Procédé selon l'une des revendications 1 à 6, **caractérisé par le fait que** l'identifiant d'utilisateur, mémorisé dans le dispositif mobile de communication, est désactivé et/ou effacé dans le cas où l'attribut distinctif univoque d'utilisateur, à l'état détecté, présente une concordance lacunaire ou inexistante avec l'attribut distinctif de référence mémorisé.

8. Procédé selon l'une des revendications 1 à 7, **caractérisé par le fait que** la demande d'authentification est effectuée d'après un profil hiérarchique de sécurité.

9. Procédé selon l'une des revendications 1 à 8, **caractérisé par le fait que** l'identification et l'authentification de l'utilisateur s'opèrent au moyen d'une combinaison de plusieurs attributs distinctifs univoques d'utilisateurs.

10. Procédé selon l'une des revendications 1 à 9, **caractérisé par le fait que** l'enregistrement du dispositif de communication, dans le réseau de communication, est effacé après expiration d'une période pouvant être préétablie.

11. Procédé selon l'une des revendications 1 à 10, **caractérisé par le fait qu'**un téléphone mobile est utilisé en tant que dispositif mobile de communication.
